Europäisches Patentamt

**European Patent Office**

**Office européen des brevets**

(11) Numéro de publication: **0 069 103**
A1

## DEMANDE DE BREVET EUROPEEN

(21) Numéro de dépôt: **82870030.2**

(22) Date de dépôt: **10.06.82**

(51) Int. Cl.³: **F 24 J 3/02**

(30) Priorité: **18.06.81  FR 8112009**

(43) Date de publication de la demande: **05.01.83**
**Bulletin 83/1**

(84) Etats contractants désignés: **AT BE CH DE GB IT LI LU NL SE**

(71) Demandeur: **PATENTS AND RESEARCHES ESTABLISHMENT Société de droit du Liechtenstein dite:, Eschen (LI)**

(72) Inventeur: **Pedone, Antonio, Place Verte 13, B-7500 Tournai (BE)**

(74) Mandataire: **Van Malderen, Michel et al, p.a. Freylinger & Associés 22 avenue J.S. Bach (bte 43), B-1080 Bruxelles (BE)**

(54) **Capteur solaire thermique à lame liquide mobile.**

(57) Capteur solaire du type comportant une feuille absorbante thermoconductrice (1) captatrice d'énergie dont une première face est dirigée vers le soleil (S) et dont la seconde face est au contact direct d'un liquide à chauffer.

Le capteur est caractérisé en ce que ladite feuille (1) est inclinée par rapport à l'horizontale et en ce qu'il comporte des moyens (13, 14) pour faire couler en continu sur ladite seconde face dirigée vers le bas de la feuille (1), une mince lame de liquide (19) se formant et s'écoulant sous l'action des forces de tension superficielle et de la pesanteur.

CAPTEUR SOLAIRE THERMIQUE A LAME LIQUIDE MOBILE

L'invention concerne un capteur solaire à lame liquide mobile.

On connaît déjà, notamment par le brevet français N°78 12340 au nom de PEDONE Angelo, un capteur solaire comportant une feuille métallique dendritique dont la face opposée à celle dirigée vers le soleil flotte sur un liquide. Ainsi, l'énergie solaire captée par les dendrites de la feuille métallique échauffe celle-ci, qui transmet sa chaleur au liquide avec lequel elle est en contact direct. Un tel capteur solaire présente un rendement particulièrement bon, à cause de l'excellente transmission des calories entre la feuille métallique et le liquide sous-jacent. Cependant, il comporte des limitations. En effet, il ne peut, à cause du liquide qu'il contient, être incliné à l'inclinaison optimale pour regarder le soleil ou bien être monté sur le toit incliné d'une maison.

Par ailleurs, dans d'autres capteurs comportant une feuille mince solidaire d'un cadre à sa périphérie et baignée par un liquide, le liquide chauffé exerce une pression relativement importante sur la feuille métallique, de sorte que celle-ci doit présenter une résistance mécanique suffisante pour résister à cette pression. Elle ne peut donc être très mince ; or, le rendement d'un capteur de ce type est d'autant meilleur que la feuille métallique est plus mince, comme cela est par exemple expliqué dans le brevet français N°80 24504 .

La présente invention a pour objet de remédier à ces limitations. Elle concerne un capteur solaire thermique du type décrit ci-dessus pouvant être incliné sur l'horizontale, par exemple pour être dirigé au mieux vers le soleil ou pour être monté sur un toit, et dont la feuille métallique peut être aussi mince que désirée, de sorte que son rendement

2

énergétique en est amélioré pratiquement jusqu'au maximum, puisqu'on peut lui donner l'inclinaison optimale vers le soleil en fonction de la latitude.

A cette fin, selon l'invention, le capteur solaire du type comportant une feuille absorbante thermoconductrice captatrice d'énergie dont une première face est destinée à être dirigée vers le soleil et dont la seconde face est dirigée vers le bas et est au contact direct d'un liquide à chauffer, est remarquable en ce que ladite feuille est inclinée par rapport à l'horizontale et en ce qu'il comporte des moyens pour faire couler en continu, sur ladite seconde face dirigée vers le bas de la feuille, une mince lame liquide se formant et s'écoulant sous l'action des forces de tension superficielle et de la pesanteur.

On conçoit aisément qu'ainsi le capteur puisse être incliné et que la feuille puisse être mince, puisque le liquide n'exerce aucune pression sur celle-ci. La mince lame de liquide glisse sur la seconde face de la feuille, sans se décoller de celle-ci, grâce aux effets de tension superficielle. Le débit de liquide est déterminé d'une part pour éviter un tel décollement, d'autre part pour permettre un équilibre thermique avantageux du système feuille-liquide. Les échanges thermiques sont alors excellents et il en est de même du rendement, puisque la feuille peut être très mince (quelques microns ou dizaines de microns).

De préférence, la feuille est du type décrit dans le brevet français N°80 24504 et est telle que sa première face est pourvue de dendrites alors que sa seconde face est lisse et, de préférence, spéculaire. Ainsi, on peut faire circuler la lame mince de liquide sur la totalité de cette seconde face et la circulation de la lame d'eau est uniforme. Dans le cas où il se formerait des trajets préférentiels pour le liquide sur ladite seconde face, par

3

exemple à cause de défauts de planéité de la feuille lors du montage, on pourrait former dans ladite seconde face de légères stries rapprochées les unes des autres, parallèles entre-elles et à la circulation de liquide. Ainsi, on détruit ces trajets préférentiels et on établit l'uniformité de circulation de la lame de liquide.

De préférence, le liquide, qui peut être de toute nature, par exemple de l'huile, est de l'eau et la feuille métallique est en un métal résistant à l'action de l'eau, tel que le cuivre ou le nickel. Eventuellement, pour éviter la formation de dépôts calcaires sur ladite seconde face de la feuille métallique, l'eau de la lame est adoucie ou déminéralisée. De plus, la feuille métallique peut être nickelée ou chromée pour mieux résister à l'action corrosive de l'eau. D'autres traitements peuvent être effectués pour augmenter la résistance à la corrosion en fonction du type de liquide qui doit être chauffé. Par ailleurs, la feuille peut être réalisée en acier inoxydable traité du côté de la face absorbante, ou en matière plastique mince noire.

Avantageusement, le capteur solaire selon l'invention comporte des moyens de distribution de liquide disposés au voisinage de la partie supérieure de la feuille et destinés à la formation de ladite lame mince, un récipient disposé au voisinage de la partie inférieure de ladite feuille et destiné à recueillir le liquide de la lame mince et des moyens de mise en circulation de liquide entre ledit récipient et lesdits moyens de distribution.

Les moyens de distribution peuvent projeter le liquide contre ladite seconde face de la feuille. En variante, ils peuvent délivrer le liquide sur un rebord dirigé à l'opposé de la seconde face du bord supérieur de ladite feuille.

Le récipient peut présenter la forme d'une gouttière disposée sous le bord inférieur de la feuille. En revanche,

4

il peut être plus compact, si le bord inférieur de la feuille est conformé en gouttière à fond incliné par rapport à l'horizontàle.

De préférence, l'eau chaude est prélevée à la partie supérieure du récipient, tandis que des moyens de complément en eau froide débouchent à la partie inférieure dudit récipient, et que les moyens de mise en circulation du liquide sont reliés à la partie inférieure dudit récipient.

En variante, on prévoit un échangeur de chaleur dans le circuit des moyens de mise en circulation du liquide.

Les figures du dessin annexé feront bien comprendre comment l'invention peut être réalisée.

La figure 1 est une vue en coupe agrandie d'une feuille métallique utilisable pour le capteur solaire selon l'invention.

La figure 2 est une vue de la face de la feuille de la figure 1, opposée à celle dirigée vers le soleil.

La figure 3 est une coupe transversale selon la ligne III-III de la figure 2.

La figure 4 est une vue de côté schématique d'un capteur solaire selon l'invention.

La figure 5 est une vue de l'avant du capteur de la figure 1.

La figure 6 est une vue de côté schématique d'une variante de réalisation du capteur solaire selon l'invention.

La figure 7 est une vue de l'avant du capteur de la figure 3.

Sur ces figures des références identiques désignent des éléments semblables.

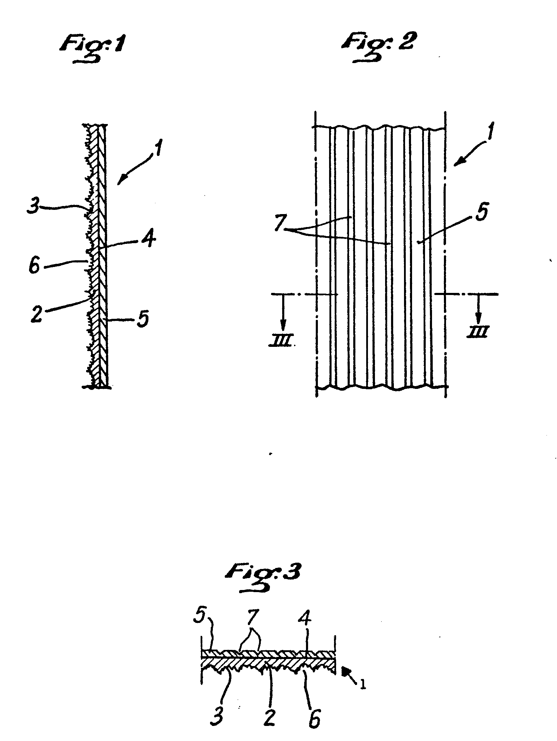

La portion de produit en feuille mince 1, montrée par les figures 1,2 et 3, est destinée à former l'élément actif du générateur solaire selon l'invention. L'exemple représenté, donné à titre non limitatif, comporte une feuille métallique 2, par exemple en cuivre électrolytique.

Sur l'une de ses faces, la feuille de cuivre 2 comporte une multiplicité de rugosités 3, telle qu'une forêt de dendrites, tandis que sa face opposée 4 est lisse et nickelée. Les rugosités 3 peuvent être recouvertes par un revêtement chimique, électro-chimique ou autre, noir ou gris, en vue de l'absorption optimale d'une énergie incidente. En revanche, la face 4 peut être revêtue d'une couche 5 d'un brillant spéculaire permanent (nickel, chrome, etc...) résistant à l'action corrosive de l'eau.

De plus, la portion de feuille 4 peut être soumise à un gaufrage engendrant des goufres concaves 6 du côté des rugosités 3, tandis que la couche 5 peut comporter un réseau serré de stries parallèles 7. Le gaufrage est par exemple effectué après formation des rugosités 3 dans la feuille 2, tandis que la couche spéculaire 5 est appliquée après ledit gaufrage, les stries 7 étant réalisées par la suite.

Le gaufrage a pour avantage d'augmenter la surface d'absorption de la feuille 1 et de multiplier naturellement et automatiquement, les réflexions des photons incidents et donc l'absorption d'énergie. Les stries 7 ont pour objet d'uniformiser l'écoulement d'une lame de liquide glissant sur la couche 5.

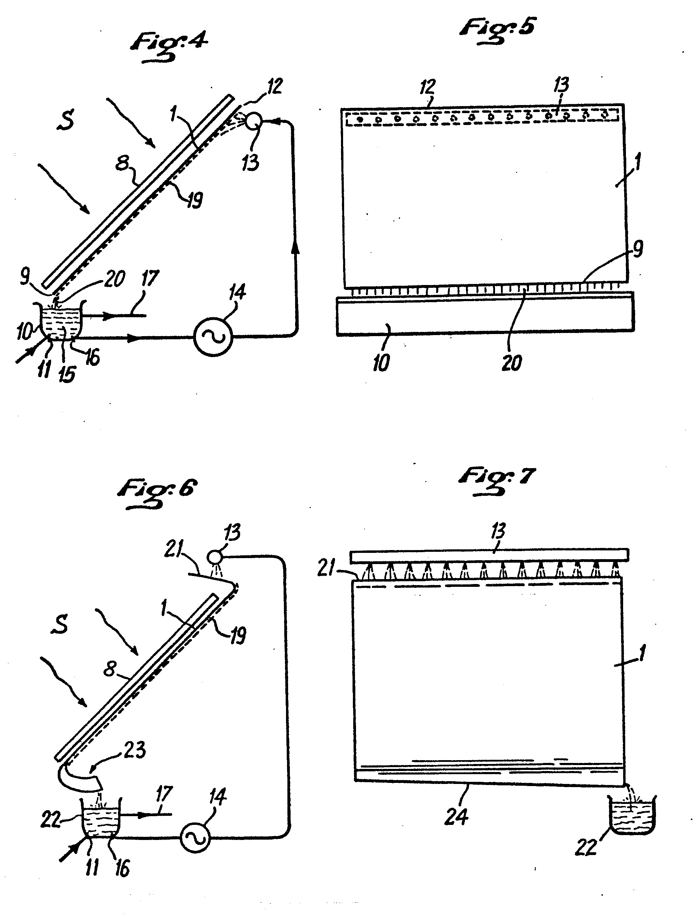

Dans le mode de réalisation des figures 4 et 5, le capteur selon l'invention comporte une feuille 1 telle que décrite

6

ci-dessus, inclinée par rapport à l'horizontale et disposée de façon que ses rugosités soient dirigées vers l'énergie solaire incidente S et que ses stries correspondent aux lignes de plus grande pente de la feuille 1. Devant la feuille 1 est disposée une plaque transparente 8 de verre, de polycarbonate ou analogue.

Sous le bord inférieur 9 de la feuille 1 est disposée une gouttière 10, pouvant être alimentée en eau froide en un point 11, voisin de son fond. Au voisinage du bord supérieur 12 de la feuille 1 est prévue une rampe de distribution 13 susceptible de répartir de l'eau sur la face 5 de la feuille 1. La rampe 13 est alimentée en eau par une pompe 14, prélevant l'eau 15 de la gouttière 10, en un point 16 voisin du fond de celle-ci et du point 11. Un tube 17 de prélèvement permet de prélever une partie de l'eau 15. Afin de ne pas pouvoir vider l'eau 15 en dessous d'un certain niveau, le fonctionnement des moyens de pompage 18 dépend d'un détecteur de niveau (flotteur, électrodes, etc...) non représenté.

Le fonctionnement du dispositif des figures 4 et 5 est le suivant.

De l'eau 15 étant introduite dans la gouttière 10 à travers 11, la pompe 14 est mise en marche de sorte que la rampe 13 répartit de l'eau à la partie supérieure de la face de la feuille 1 qui est opposée au soleil.

Sous l'action de la gravité et des forces de tension superficielle, il en résulte la formation d'une mince lame d'eau 19 s'écoulant sur ladite face , de façon uniforme grâce aux stries 7. Au cours de sa glissade le long de ladite face, cette lame d'eau 19 s'échauffe en prélevant les calories développées dans la feuille 1 par l'énergie solaire incidente S. Ainsi, à la partie inférieure de la feuille 1, de l'eau chaude 20 tombe dans la gouttière 10.

7

La température de l'eau 15 s'élève donc et, par le tube 17, on peut prélever de l'eau chaude en vue de son utilisation (dans les limites de niveau mentionnées ci-dessus). Lorsque le niveau de l'eau 15 baisse dans la gouttière 10 par suite de son prélèvement par le tube 17, il est possible de réintroduire de l'eau froide en 11.

On remarquera que dans le mode de réalisation des figures 4 et 5, il est nécessaire que la rampe 13 projette l'eau avec une certaine pression sur la feuille 1, c'est-à-dire que la pompe 14 non seulement élève l'eau jusqu'à la rampe 13, mais encore mette l'eau sous pression.

Le mode de réalisation des figures 6 et 7 permet d'éviter cette mise sous pression de l'eau. Pour cela le bord supé-reur de la feuille 1 est replié vers l'avant pour former un rebord 21 au moins légèrement incliné vers le bas de l'avant vers l'arrière et la rampe 13 est disposée au-dessus du rebord 21. Ainsi, l'eau sortant de la rampe 13 peut tomber sur le rebord 21 par simple gravité, puis s'écouler sur la face 5 pour former la lame 19.

De plus, dans le mode de réalisation des figures 6 et 7, la gouttière allongée 17 est remplacée par un récipient plus compact 22, disposé à une extrémité de la feuille 1, tandis que le bord inférieur de la feuille 1 est replié vers l'arrière pour former une gouttière 23, dont le fond 24 est incliné vers ledit récipient 22.

On remarquera que, dans les réalisations des figures 4 à 7, il n'est pas nécessaire d'ajouter du produit antigel à l'eau 15 pour protéger le capteur en cas d'arrêt nocturne de fonctionnement pendant les périodes froides.

En effet, en cas d'arrêt nocturne dans le fonctionnement, il ne peut y avoir d'eau dans le capteur.

Eventuellement, l'eau 15 est adoucie ou déminéralisée avant d'être introduite dans la gouttière 10 ou le récipient 22.

Bien entendu, quoique les modes de réalisation des figures 4 à 7 soient avantageux, ils peuvent subir des modifications sans sortir du cadre de la présente invention. Par exemple, au lieu de prélever l'eau chaude au moyen d'un tube 17 directement dans la gouttière 10 ou le récipient 22, il serait possible de prévoir un échangeur de chaleur sur le circuit de la pompe 14 afin que de la chaleur soit transmise à un autre circuit de fluide (non représenté).

9

REVENDICATIONS

1.- Capteur solaire du type comportant une feuille absorbante thermoconductrice (1) captatrice d'énergie dont une première face (3,6) est destinée à être dirigée vers le soleil S et dont la seconde face 5 est au contact direct d'un liquide à chauffer, caractérisé en ce que ladite feuille (1) est inclinée par rapport à l'horizontale et en ce qu'il comporte des moyens (13,14) pour faire couler en continu, sur ladite seconde face (5) dirigée vers le bas de la feuille (1), une mince lame de liquide (19) se formant et s'écoulant sous l'action des forces de tension superficielle et de la pesanteur.

2.- Capteur solaire selon la revendication 1, caractérisé en ce que ladite première face n'est pas au contact du liquide.

3.-Capteur solaire selon l'une des revendications 1 ou 2, caractérisé en ce qu'il comporte des moyens de distribution de liquide (13) disposés au voisinage de la partie supérieure de la feuille (1) et destiné à la formation de ladite lame mince, un récipient (10,22) disposé au voisinage de la partie inférieure de ladite feuille (1) et destinés à recueillir le liquide de la lame mince et des moyens (14) de mise en circulation de liquide entre ledit récipient et lesdits moyens de distribution.

4.- Capteur solaire selon la revendication 3, caractérisé en ce que les moyens de distribution (13) projette le liquide contre ladite seconde face (5) de la feuille (1).

10

5.- Capteur solaire selon la revendication 3, caractérisé en ce que les moyens de distribution (13) délivre le liquide sur un rebord (21) dirigé à l'opposé de ladite seconde face du bord supérieur de ladite feuille (1).

6.- Capteur solaire selon la revendication 3, caractérisé en ce que le récipient présente la forme d'une gouttière (10) disposée sous le bord inférieur (9) de la feuille (1).

7.- Capteur solaire selon la revendication 3, caractérisé en ce que le bord inférieur de la feuille (1) est conformé en gouttière (23) à fond (24) incliné par rapport à l'horizontale.

8.-Capteur solaire selon la revendication 3, caractérisé en ce que l'eau chaude est prélevée à la partie supérieure (en 17) du récipient (10,22) tandis que des moyens de complément en eau froide débouchent à la partie inférieure dudit récipient (en 11).

9.- Capteur solaire selon la revendication 3, caractérisé en ce que les moyens (14) de mise en circulation de liquide sont reliés à la partie inférieure (en 16) dudit récipient (10,22).

10.- Capteur solaire selon la revendication 3, caractérisé en ce qu'il comporte un échangeur de chaleur dans le circuit des moyens (14) de mise en circulation du liquide.

11.- Capteur solaire selon l'une quelconque des revendications précédentes, caractérisé en ce que ladite seconde face de la feuille est traitée pour résister à l'action corrosive du liquide.

12.- Feuille mince pour la réalisation du capteur solaire

11

selon l'une quelconque des revendications 1 à 11, dont la
première face comporte des rugosités de surfaces (3,6)
et/ou un traitement absorbant, tandis que la seconde face
(5) est lisse,

caractérisée en ce que ladite seconde face comporte un
réseau de série de stries (7), disposées parallèlement à
la ligne de plus grande pente de ladite feuille.

*Fig:1*

*Fig:2*

*Fig:3*

0069103

2/2

Fig: 4

Fig: 5

Fig: 6

Fig: 7

**Office européen des brevets**

## RAPPORT DE RECHERCHE EUROPEENNE

Numéro de la demande

EP 82 87 0030.2

| Catégorie | Citation du document avec indication, en cas de besoin, des parties pertinentes | Revendication concernée |
|---|---|---|
| X | US - A - 4 124 020 (NOBLE)<br>* en entier *<br>-- | 1-3,6, 9,10,12 |
| X | US - A - 4 085 732 (HYSOM)<br>* en entier *<br>-- | 1-3,5, 7,9,10 |
| X | DE - A1 - 2 748 424 (STARKERT)<br>* page 5, paragraphes 2, 3 *<br>-- | 1-4 |
| A | EP - A1 - 0 022 686 (COSMOS INVESTI-GATIONS AND RESEARCH)<br>& FR - A - 2 461 896<br>-- | 1-4 |
| A | FR - A1 - 2 415 780 (A.N.V.A.R.)<br>-- | 1 |
| D,A | FR - A1 - 2 390 686 (PEDONE)<br>* page 3, lignes 10 à 25; fig. 1 *<br>---- | 12 |

**DOCUMENTS CONSIDERES COMME PERTINENTS**

**CLASSEMENT DE LA DEMANDE (Int. Cl. ³)**

F 24 J 3/02

**DOMAINES TECHNIQUES RECHERCHES (Int. Cl. ³)**

F 24 J 3/00

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| Berlin | 09-09-1982 | PIEPER |

OEB Form 1503.1   06.78